# EUROPEAN PATENT SPECIFICATION

(11) **EP 3 437 823 B1**
(45) Date of publication and mention of the grant of the patent: **14.05.2025**
(21) Application number: 17774374.7
(22) Date of filing: 16.03.2017
(51) Int. Cl.: B29C 45/34, B29C 33/10, B29C 45/17

(54) **GAS DISCHARGE STRUCTURE**
GAS ENTLÜFTUNGSSTRUKTUR
STRUCTURE D'ÉVACUATION DE GAZ

(30) Priority: 30.03.2016 JP 2016068752
(43) Date of publication of application: 06.02.2019
(73) Proprietor: Sanko Gosei Ltd., Nanto-shi, Toyama 939-1698 (JP)
(72) Inventor: MITSUSHIMA, Toshio, Nanto-shi Toyama 939-1698 (JP); NAKASHIMA, Hisashi, Nanto-shi Toyama 939-1698 (JP)
(74) Representative: Murgitroyd & Company
(86) International application number: PCT/JP2017/010607
(87) International publication number: WO 2017/169830

(56) References cited:
- CN-A- 103 817 875
- DE-A1- 102004 028 462
- DE-A1- 3 938 086
- GB-A- 2 372 958
- JP-A- 2004 276 265
- JP-A- 2012 035 469
- JP-A- 2013 125 849
- JP-A- H01 176 530
- JP-A- H01 176 530
- JP-A- H01 210 323
- JP-A- H07 100 870
- JP-A- H08 170 107
- JP-A- H08 300 363
- JP-A- H08 300 363
- KR-B1- 100 396 090

## Description

### Technical Field

The present invention relates to a gas venting/introducing structure.

### Background Art

In injection molding to prepare resin moldings, it is necessary to inject a resin into a mold while venting air in the mold to the outside of the mold. Accordingly, gas venting/introducing structures provided with minute gaps in the form of slits are disposed in the mold. The gas venting/introducing structure is provided with such slits defining gas flow paths. The gas venting/introducing path defined by the slit has such cross-sectional width and length as to substantially prevent the resin from flowing into the gas venting/introducing structure in the vicinity of the article-facing surface but has a wider cross-section in the area apart from the article-facing surface. The gas venting/introducing structure has such a structure that a plurality of plates provided with such gas venting/introducing paths are clamped together by means of bolts and aligned using an aligning pin.

Since the clamping bolts and the aligning pin are used as described above, this results in a laminated structure wherein the distance between the gas venting/introducing paths extending side by side is large. Consequently, a length of the gas venting/introducing path/a length of the plate ratio is small (see Patent Document 1).

The plate as a constituent of the gas venting/introducing structure has a rather large thickness to prevent deformation of the plate defining the gas venting/introducing path by caused machining or molding pressure. In consequence, a ratio of a width of the gas venting/introducing path to a thickness of the plate is small, and this results in a laminated structure comprising a small number of laminated plates in a certain thickness. Such laminated structures have been put on the market.

### Prior Art Document

### Patent Document

Patent Document 1: JP 2004 167714 A
Patent Document 2: DE3938086A1 refers to an injection molding tool to relieve air;
Patent Document 3: KR100396090B1, which refers to steel-making processes and to a porous plug of a steel ladle.
Patent Document 4: JP H01 176530 A discloses mould exhaust structures for vacuum forming, wherein part of a back of a cavity wall of a female mould is made of porous material, which is connected to a vacuum source through an exhaust hole 21.
Patent Document 5: GB 2 372 958 A relates to a mould usable in forming shaped ceramic items comprising a permeable inner lining defining a moulding cavity and pipework leading through an outer lining to at least one chambers in communication with an outer surface of the inner lining.
Patent Document 6: JP 2004 276265 A discloses an air passing mold member and Patent Document 7: JP H08 300363 A refers to a golf ball producing mold with embodiments having at least one porous material for venting or having venting structures within a non porous portion.

### Summary of the invention

### Problems to be Solved by the Invention

In the gas venting/introducing structure disclosed in Patent Document 1 or the like which has been put on the market, a total length of slits is short relative to a length of the gas venting/introducing structure and a number of laminated plates is small relative to a thickness of the gas venting/introducing structure. This leads to low aperture ratio and thus poor gas venting efficiency. Consequently, during charging of a resin into a mold cavity, capacity to allow a gas to escape out of the mold cavity through the slits is poor as compared with an amount of the gas required to be discharged from the mold cavity per time unit. Accordingly, the gas is likely to remain in the mold cavity, causing impairment in quality of a resin article to be obtained.

Further, due to the sparse distribution of the slits in the lamination direction, in coincidence between the position of the confluence of countercurrents of the resin and the position of the gas venting/introducing path is likely to occur. To deal with this, change in thickness of the gas venting/introducing structure in the lamination direction is required.

Moreover, since the gas venting/introducing structure is constructed using the clamping bolts and the aligning pin, assembly operation of the gas venting/introducing structure itself and aligning operation are necessarily involved when the gas venting/introducing structure is incorporated in the mold.

In addition, since the gas venting/introducing paths have a wider cross-section in the area apart from the article-facing surface than that in the vicinity of the article-facing surface, if fractions of the resin flow into the gas venting/introducing paths through the narrower cross-sectional area in the vicinity of the article-facing surface in spite of the minuteness, the resin fractions are likely to deposit and remain on the inner wall of the gas venting/introducing paths in the area having the wider cross-section.

Accordingly, if the gas venting/introducing structure is washed without disassembly of the gas venting/introducing structure, it is difficult to remove the resin deposits. Consequently, disassembly-washing-reassembly of the gas venting/introducing structure are required.

In view of the above-described problems in the prior art, it is an object of the present invention to provide a gas venting/introducing structure which has such a high aperture ratio as to efficiently discharge a gas in a mold cavity and which has a 3D-configuration allowing discharge of the gas from various sites.

### Means to Solve the Problems

The present invention relates to a gas venting structure according to claim 1. Preferred embodiments are disclosed in the dependent claim. A gas venting and optionally introducing structure according to the present invention comprises a body and a porous portion integrated with the body. The body is provided with a plurality of gas venting paths formed therein. Each of the plurality of gas venting paths is in communication with the porous portion at its one end. The plurality of gas venting paths are open to the outside of the body at the other ends thereof in such a manner that at least two gas venting paths are so constructed as to merge into a single path.

This enables a gas e.g. air to be introduced via the single path, thereby simplifying connection between the gas venting paths and a gas supply source such as an air supply source. In other words, by simply connecting a gas supply source such as an air supply source to the single path, the gas is supplied to the entire surface of the article through a plurality of gas venting paths via the single path. Further, cleaning of the gas venting structure itself with a thinner or the like can be easily carried out by supplying the thinner or the like to the plurality of gas venting paths via the single path.

The body is made of a porous metal denser than the material of the porous portion. Each of the gas venting paths preferably has an inner wall which is defined by a smooth surface finished by numerical control machining. This precisely eliminates variations in the cross-section X of the gas venting paths to thereby prevent resin deposits from remaining in the gas venting paths, and further, facilitates cleaning operation of the inner walls of the gas venting paths.

The distance between the communication side of the porous portion with which the plurality of gas venting paths are in communication and the opposite side of the porous portion, i.e., the thickness of the porous portion is preferably in a range of 1mm to 5mm. If the distance is smaller than 1mm, toughness is so poor as to be unresistible to pressure exerted by a resin melt injected into a mold. On the other hand, if the distance exceeds 5mm, gas venting efficiency becomes poor.

At the communication part between said gas venting paths and said porous portion, a concavity is preferably formed to thereby permit the gas to escape successively from various sites as the resin melt advances in the mold, enabling the gas present in a broad area to efficiently be discharged.

### Effect of Invention

According to the gas venting structure of the present invention, when incorporated in an injection mold, the gas venting/introducing structure has a mechanical strength resistible to a pressure exerted by a resin and such a high aperture ratio in whole through from the entrance area to the exit as to easily vent a gas in a mold cavity even in the vicinity of the terminal of a unidirectional flow of the resin or confluence of countercurrents of the resin over an entire period of mass-production.

### Brief Description of Drawings

Fig.1 is a schematic sectional view of one embodiment of a gas venting/introducing structure according to the present invention.
Fig.2 is a schematic external view of one embodiment of a gas venting structure according to the present invention.

### Mode for Carrying Out the Invention

In the following, the embodiment of the gas venting structure of the present invention will be described with reference to the drawings.

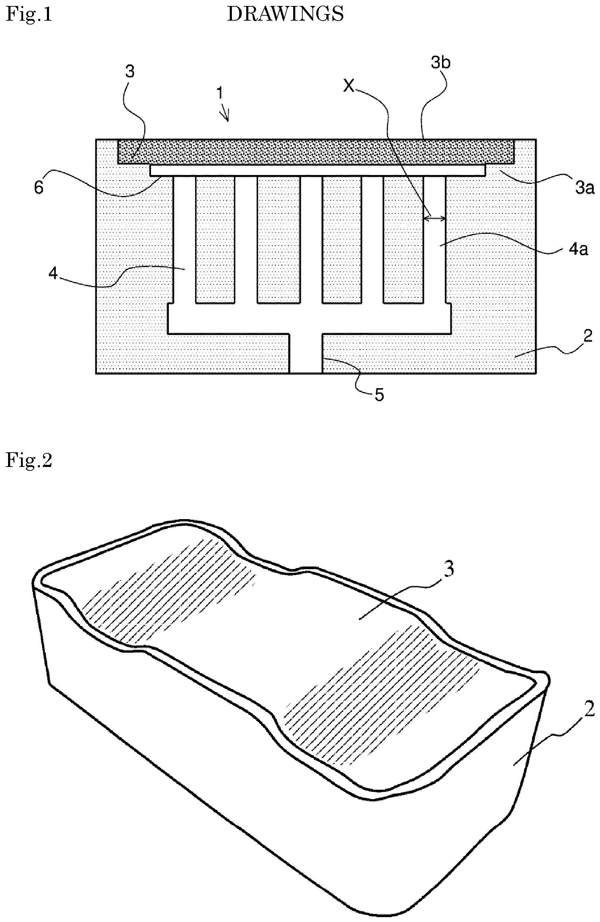

As shown in Fig. 1, a gas venting structure 1 according to the embodiment has a body 2 and a porous portion 3 integrated with the body 2. In the body 2, a plurality of gas venting paths 4 are formed. Each of the plurality of gas venting paths 4 is in communication with the porous portion 3 at its one end. The plurality of gas venting paths 4, i.e., at least two gas venting paths 4 are so constructed as to merge into a single path 5 open to the outside of the body 2 at their other ends.

As shown in Fig.2, even if the gas venting structure 1 has an outer surface conforming to an article shape, in particular, in the porous portion, the gas venting structure is capable of releasing or introducing a gas from various sites through the plurality of gas venting or introducing paths.

The body 2 is made of a porous metal which is denser than the material of the porous portion 3. The gas venting paths 4 each have an inner wall 4a which is defined by a smooth surface (not shown) finished by numerical control machining.

This precisely eliminates variations in the cross-section X of the gas venting path 4 to thereby prevent resin deposits from remaining in the gas venting path.

The distance between the communication side 3a of the porous portion 3 with which the plurality of gas venting paths 4 are in communication and the opposite side 3b is of the order of 4mm. The porous portion 3 has a thickness of the order of 4mm.

At the communication part between the gas venting paths 4 and the porous portion 3, a concavity 6 is formed.

The above-described gas venting structure 1 according to this embodiment may be produced in the following process.

### 1. Squeegeeing

On a shaping/machining table, a metal powder as a material for the gas venting/introducing structure 1 is squeegeed in a layer having a thickness of 0.05mm.

### 2. Laser Sintering

Subsequently, the metal powder, as a material for the gas venting/introducing structure 1, squeegeed in the layer on the shaping/machining table is irradiated with a laser beam to sinter the metal powder in a shape of an article. After completion of the sintering, the same metal powder is squeegeed on the sintered metal layer in a next layer with a thickness of 0.05mm. Then, the next metal powder layer is irradiated with a laser beam and thereby sintered. The steps of 1. Squeegeeing and 2. Laser Sintering are repeated 10 times to form a laminate having a thickness of 0.5mm, followed by Machining.

### 3. Machining

By means of an end mill, a contour of the product resulting from 1.Squeegeeing and 2. Laser Sintering is precisely machined at a high speed to effect finishing.

### 4. Repetition of Squeegeeing-Laser Sintering-Machining steps

By repeating the steps of 1. Squeegeeing, 2. Laser Sintering and 3. Machining (finishing by machining), the gas venting/introducing structure 1 is constructed from the lower layer to the upper layer.

Since the gas venting structure is prepared through the above-described steps, the body 2 and the porous portion 3 are bonded by the sintering. As a result, the gas venting structure 1 is obtained as a one piece wherein the body 2 and the porous portion are integrated. Further, through the production process, the gas venting/introducing structure can be so constructed as to have a desired complicated inner form. Accordingly, the gas venting paths 4 as inner paths of the body 2 can be so constructed as to have smooth surface 4a finished by numerical control machining.

As a resin to be subjected to (for, used in) injection molding by means of the above-described mold, there may be mentioned thermoplastic resins such as a polyethylene terephthalate (PET), a polybutylene terephthalate (PBT), a polybutylene-ethylene terephthalate (PBT-PET copolymer resin), a polyether ether ketone (PEEK resin), a polyphenylene sulfide (PPS), a polyetherimide (PEI), nylon 6 (PA6), nylon 66 (PA66), nylon 6T (PA6T), a polyphthalamide (PPA), a polystyrene (PS), an acrylonitrile-butadiene-styrene resin (ABS resin), a vinyl chloride resin (PVC), a polyacetal (polyoxymethylene: POM), a liquid crystal polymer (LCP), a polysulphone (PSU), a polypropylene (PP), a polycarbonate (PC), and the like. These may be used alone or in combination. There may also be mentioned thermosetting resins such as a phenolic resin (PF), an epoxy resin (EP), a diallyl phthalate resin (PDAP), a silicone resin (SI), a polyimide resin (PI), a melamine resin (MF), a urea resin (UF), and the like. In these thermoplastic resins and thermosetting resins, an inorganic filler such as carbon fibers, glass fibers, glass beads, talc, or the like may be incorporated with a view to improving heat resistance, dimensional stability or the like, if desired. Further, an organic filler such as cellulose nanofibers or the like may be incorporated therein, if desired.

### Note on Reference Numbers

1 ··· gas venting and optionally introducing structure,
2 ··· body,
4 ··· gas venting and optionally introducing path,
5 ··· path,
6 ··· concavity

## Claims

1. A gas venting structure (1) for venting gas in an injection mold cavity comprising
a body (2) and a porous portion (3) integrated with the body (2), said body (2) being provided with a plurality of gas venting paths (4) formed therein, each of said plurality of gas venting paths (4) being in communication with the porous portion (3) at its one end, **characterized in that**
said plurality of gas venting paths (4) are open to the outside of the body (2) at the other ends thereof in such a manner that at least two gas venting paths (4) are so constructed as to merge into a single path (5), and wherein at the communication part between said gas venting paths (4) and said porous portion, a concavity (6), which is in communication with the plurality of gas venting paths (4) is formed,
wherein said body (2) is made of a porous metal denser than the material of said porous portion (3).

2. The gas venting structure (1) according to claim 1, wherein the distance between the communication side of said porous portion (3) with which the plurality of gas venting paths (4) are in communication and the opposite side of said porous portion is in a range of 1 mm to 5 mm.

## Patentansprüche

1. Eine Gasabzugsstruktur (1) zum Abziehen von Gas in einem Spritzgussformhohlraum, die Folgendes beinhaltet:
einen Körper (2) und einen porösen Abschnitt (3), der in den Körper (2) integriert ist,
wobei der Körper (2) mit einer Vielzahl von darin ausgebildeten Gasabzugspfaden (4) versehen ist, wobei jeder der Vielzahl von Gasabzugspfaden (4) an seinem einen Ende mit dem porösen Abschnitt (3) in Verbindung steht, **dadurch gekennzeichnet, dass** die Vielzahl von Gasabzugspfaden (4) an ihren anderen Enden zu der Außenseite des Körpers (2) derart offen sind, dass mindestens zwei Gasabzugspfade (4) so konstruiert sind, dass sie in einen einzigen Pfad (5) übergehen, und wobei an dem Verbindungsteil zwischen den Gasabzugspfaden (4) und dem porösen Abschnitt eine Konkavität (6) ausgebildet ist, die mit der Vielzahl von Gasabzugspfaden (4) in Verbindung steht,
wobei der Körper (2) aus einem porösen Metall gefertigt ist, das dichter als das Material des porösen Abschnitts (3) ist.

2. Gasabzugsstruktur (1) gemäß Anspruch 1, wobei der Abstand zwischen der Verbindungsseite des porösen Abschnitts (3), mit der die Vielzahl von Gasabzugspfaden (4) in Verbindung stehen, und der gegenüberliegenden Seite des porösen Abschnitts in einem Bereich von 1 mm bis 5 mm liegt.

## Revendications

1. Une structure d'évacuation des gaz (1) pour l'évacuation de gaz dans une cavité de moule d'injection, comprenant
un corps (2) et une portion poreuse (3) intégrée au corps (2), ledit corps (2) étant pourvu d'une pluralité de voies d'évacuation des gaz (4) formées en son sein, chaque voie de ladite pluralité de voies d'évacuation des gaz (4) étant en communication avec la portion poreuse (3) au niveau de son extrémité, **caractérisée en ce que**
ladite pluralité de voies d'évacuation des gaz (4) sont ouvertes sur l'extérieur du corps (2) au niveau de leurs autres extrémités de manière telle qu'au moins deux voies d'évacuation des gaz (4) sont construites de façon à se rejoindre pour ne former qu'une seule voie (5), et où, au niveau de la partie de communication entre lesdites voies d'évacuation des gaz (4) et ladite portion poreuse, une concavité (6), qui est en communication avec la pluralité de voies d'évacuation des gaz (4), est formée,
où ledit corps (2) est réalisé en un métal poreux plus dense que le matériau de ladite partie poreuse (3).

2. La structure d'évacuation des gaz (1) selon la revendication 1, où la distance entre le côté de communication de ladite portion poreuse (3) avec laquelle la pluralité de voies d'évacuation des gaz (4) sont en communication et le côté opposé de ladite portion poreuse est comprise dans une gamme allant de 1 mm à 5 mm.
